# EUROPEAN PATENT APPLICATION

(11) **EP 4 474 217 A1**
(43) Date of publication of application: **11.12.2024**
(21) Application number: 23749793.8
(22) Date of filing: 01.02.2023
(51) Int. Cl.: B60Q 1/00, B60Q 1/04, F21Y 105/10, F21Y 115/10, F21V 7/00, F21V 14/04, F21S 43/14, F21W 102/13, F21W 103/60

(54) **VEHICLE LAMP FITTING**

(30) Priority: 04.02.2022 JP 2022016620
(71) Applicant: KOITO MANUFACTURING CO., LTD., Minato-ku Tokyo 108-8711 (JP)
(72) Inventor: SERIZAWA Kana, Shizuoka-shi, Shizuoka 424-8764 (JP); MANO Mitsuharu, Shizuoka-shi, Shizuoka 424-8764 (JP)
(74) Representative: Hoffmann Eitle
(86) International application number: PCT/JP2023/003234
(87) International publication number: WO 2023/149477

(57) **Abstract**

A vehicle lamp fitting (1) includes a lamp unit (10) that emits light toward a road surface in front of a vehicle (100) and performs drawing on the road surface. The light emitted from the lamp unit (10) forms a predetermined image (40) in which at least a part of a periphery of a reference image (41) indicating a predetermined character is blurred when a plane perpendicular to an emission direction of the light is irradiated with the light, and a degree of blurring below a portion overlapping a first straight line (L1) as a predetermined portion in the predetermined image (40) is stronger than a degree of blurring above the portion overlapping the first straight line (L1).

## Description

### Technical Field

The present invention relates to a vehicle lamp fitting.

### Background Art

As a vehicle lamp fitting for an automobile or the like, a vehicle lamp fitting that draws a predetermined image on a road surface in front of a vehicle by emitted light is known, and Patent Literature 1 below discloses such a vehicle lamp fitting.

[Patent Literature 1] JP 2014-165130 A

### Summary of Invention

In a vehicle lamp fitting that performs drawing on a road surface in front of a vehicle, the lower side of the emitted light is emitted to the road surface close to the vehicle, and the upper side thereof is emitted to the road surface far from the vehicle. Since the light propagates while diffusing, an upper side of an image drawn on the road surface may appear blurred from a lower side thereof, and the driver may feel discomfort about the image drawn on the road surface.

Therefore, an object of the present invention is to provide a vehicle lamp fitting that can suppress feeling of discomfort about an image drawn on a road surface.

In order to achieve the above object, a vehicle lamp fitting according to the present invention includes a lamp unit that emits light toward a road surface in front of a vehicle and performs drawing on the road surface, in which the light forms a predetermined image in which at least a part of a periphery of a reference image indicating a predetermined character is blurred when a plane perpendicular to an emission direction of the light is irradiated with the light, and a degree of blurring below a predetermined portion in the predetermined image is stronger than a degree of blurring above the predetermined portion.

The light forming the upper side of the predetermined portion in the predetermined image is emitted to a road surface farther from the vehicle as compared with the light forming the lower side of the predetermined portion. Therefore, the image drawn on the road surface by the light forming the upper side of the predetermined portion in the predetermined image looks blurred by the diffusion of the light as compared with the image drawn on the road surface by the light forming the lower side of the predetermined portion. As described above, the predetermined image is an image in which at least a part of the periphery of the reference image indicating the predetermined character is blurred, and the degree of blurring below the predetermined portion in this image is stronger than the degree of blurring above the predetermined portion. Therefore, according to this vehicle lamp fitting, as compared with the case where the degree of blurring of the predetermined image formed when the light emitted from the lamp unit is emitted to the plane perpendicular to the emission direction of the light is the same in an up-down direction, the degree of blurring around the reference image drawn on the road surface can be made uniform in the up-down direction, and it is possible to suppress the feeling of discomfort to the reference image drawn on the road surface.

The predetermined image includes the reference image, an upper contour portion extending in a band shape along an edge portion of the reference image above the predetermined portion and being darker than the edge portion, and a lower contour portion extending in a band shape along the edge portion of the reference image below the predetermined portion and being darker than the edge portion, and the lower contour is brighter than the upper contour.

According to such a configuration, the contrast between the lower contour portion and the reference image becomes weaker than the contrast between the upper contour portion and the reference image, and the degree of blurring below the predetermined portion in the predetermined image becomes stronger than the degree of blurring above the predetermined portion.

In this case, a width of the lower contour portion may be wider than a width of the upper contour portion.

According to such a configuration, as compared with a case where the width of the lower contour portion is narrower than the width of the upper contour portion, the degree of blurring below the predetermined portion in the predetermined image can be easily made stronger than the degree of blurring above the predetermined portion.

The predetermined image includes only the reference image and a lower contour portion that extends in a band shape along an edge portion of the reference image below the predetermined portion and is darker than the edge portion.

According to such a configuration, the degree of blurring below the predetermined portion in the predetermined image is stronger than the degree of blurring above the predetermined portion.

When the predetermined image has the lower contour portion, brightness of the lower contour portion may decrease stepwise according to a distance from the edge portion of the reference image.

According to this vehicle lamp fitting, it is possible to suppress feeling of discomfort in blurring below a predetermined portion around the reference image drawn on a road surface.

When the predetermined image has the lower contour portion, an upper width of the lower contour portion may be narrower than a lower width of the lower contour portion.

In the image drawn on the road surface, the portion closer to the vehicle tends to be less likely to blur, and the lower side of the predetermined image formed by the light emitted from the lamp unit is drawn on the road surface closer to the vehicle. Therefore, with the above configuration, the degree of blurring around the drawn reference image can be made uniform in the up-down direction as compared with the case where the width is the same between the upper side and the lower side in the lower contour portion.

In this case, a width of the lower contour portion may be narrowed stepwise from a lower side to an upper side.

With such a configuration, the degree of blurring around the drawn reference image can be made more uniform in the up-down direction.

Brightness of an upper side of the reference image may be brighter than brightness of a lower side of the reference image.

In the image drawn on the road surface, a portion farther from the vehicle tends to be darker due to diffusion of light. Therefore, with the above configuration, the brightness of the drawn reference image can be made uniform in the up-down direction as compared with the case where the brightness is the same between the upper side and the lower side in the reference image.

In this case, the brightness of the reference image may be brighter increase stepwise from the lower side to the upper side.

With such a configuration, the brightness of the drawn reference image can be made more uniform in the up-down direction.

The above-described vehicle lamp fitting may further include a control unit that controls the lamp unit so that a degree of blurring of the predetermined image changes based on information input from a detection device that detects a traveling situation of the vehicle.

With such a configuration, the degree of blurring around the drawn reference image can be changed according to the traveling situation of the vehicle. Examples of the traveling situation of the vehicle include a state of a road surface in front of the vehicle, a traveling speed of the vehicle, and brightness around the vehicle.

In this case, the control unit may control the lamp unit so that a degree of blurring below the predetermined portion in the predetermined image becomes weaker when a rising point where a gradient in front of the vehicle rises by a predetermined angle or more is detected by the detection device than when the rising point is not detected.

For example, an optical path length of light emitted to the side further back than a rising point where the gradient of the road surface relatively rises, such as a point where the road surface changes from a flatland to an uphill or a point where the road surface changes from a downhill to a flatland, is shorter than a case where the gradient of the road surface does not change. For this reason, in the image drawn on the side further back than the rising point, the degree of blurring is weakened as compared with the case where the gradient of the road surface does not change. In this vehicle lamp fitting, when the rising point is detected, the degree of blurring below the predetermined portion in the predetermined image is weaker than when the rising point is not detected. Therefore, according to this vehicle lamp fitting, the degree of blurring around the drawn reference image can be made uniform in the up-down direction as compared with the case where the degree of blurring below the predetermined portion in the predetermined image does not change when the rising point is detected.

In a case where the vehicle lamp fitting includes a control unit, the control unit may control the lamp unit so that a degree of blurring below the predetermined portion in the predetermined image becomes stronger when a lowering point where a gradient in front of the vehicle lowers by a specific angle or more is detected by the detection device than when the lowering point is not detected.

For example, an optical path length of light emitted to the side further back than a lowering point where the gradient of the road surface relatively lowers, such as a point where the road surface changes from a flatland to a downhill or a point where the road surface changes from an uphill to a flatland, is longer than a case where the gradient of the road surface does not change. Therefore, in the image drawn on the side further back than the lowering point, the degree of blurring is stronger than the case where the gradient of the road surface does not change. In this vehicle lamp fitting, when the lowering point is detected, the degree of blurring below the predetermined portion in the predetermined image is weaker than when the lowering point is not detected. Therefore, according to this vehicle lamp fitting, the degree of blurring around the drawn reference image can be made uniform in the up-down direction as compared with the case where the degree of blurring below the predetermined portion in the predetermined image does not change when the lowering point is detected.

As described above, according to the present invention, it is possible to provide a vehicle lamp fitting that can suppress discomfort about the image drawn on the road surface.

### Brief Description of Drawings

FIG. 1 is a diagram schematically illustrating a vehicle including a vehicle lamp fitting according to an embodiment of the present invention.
FIG. 2 is a diagram schematically illustrating a predetermined image formed by light emitted from a lamp unit in the present embodiment.
FIG. 3 is an enlarged view of a part of a predetermined image illustrated in FIG. 2.
FIG. 4 is a control flowchart of a control unit according to the present embodiment.
FIG. 5 is a diagram schematically illustrating an example of a state in which a predetermined image is drawn on a road surface.
FIG. 6 is a diagram illustrating a predetermined image in which a degree of blurring on a lower side is weakened, similarly to FIG. 3.
FIG. 7 is a diagram illustrating a predetermined image in which the degree of blurring on the lower side is strengthened, similarly to FIG. 3.

### Description of Embodiments

Hereinafter, modes for implementing a vehicle lamp fitting according to the present invention will be exemplified together with the accompanying drawings. The embodiments exemplified below are intended to facilitate understanding of the present invention and are not intended to limit the present invention. The present invention can be modified and improved without departing from the gist thereof. In addition, in the present invention, constituent elements in the following exemplary embodiments may be appropriately combined. In the drawings referred to below, dimensions of each member may be changed for easy understanding.

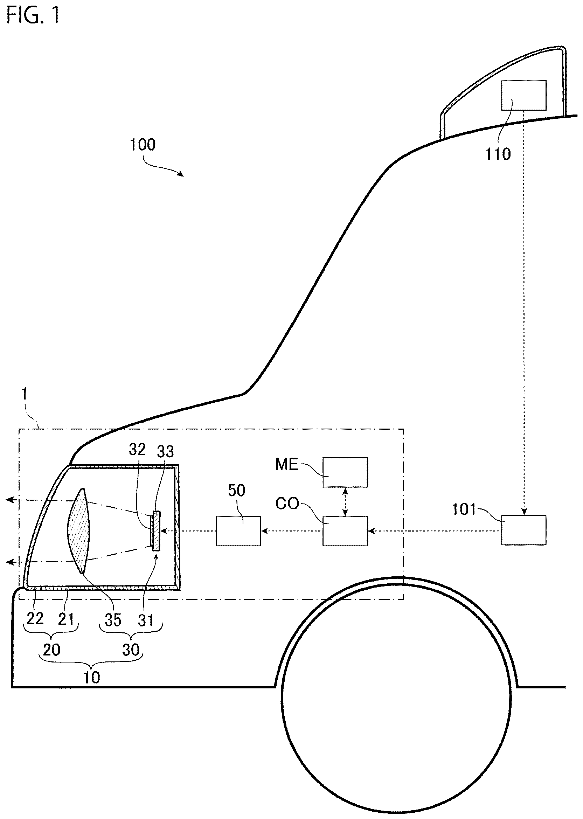

FIG. 1 is a diagram schematically illustrating a vehicle including a vehicle lamp fitting according to an embodiment of the present invention. As illustrated in FIG. 1, a vehicle 100 of the present embodiment is an automobile, and includes a vehicle lamp fitting 1 and a detection device 110 that detects a traveling situation of the vehicle 100.

In the present embodiment, the vehicle lamp fitting 1 mainly includes a lamp unit 10, a power supply circuit 50, a control unit CO, and a memory ME.

The lamp unit 10 is disposed in a front portion of the vehicle 100, and is configured to emit light toward a road surface in front of the vehicle 100 to perform drawing on the road surface. In the present embodiment, the lamp unit 10 mainly includes a case 20 and a main body 30.

The case 20 mainly includes a housing 21 and a front cover 22. The front cover 22 transmits light emitted from the main body 30. The housing 21 is formed in a box shape having an opening on the front side, and the front cover 22 is fixed to the housing 21 to close the opening. In this way, an accommodation space surrounded by the housing 21 and the front cover 22 is formed in the case 20, and the main body 30 is disposed in the accommodation space.

The main body 30 is configured to emit light forming a predetermined image, and the light emitted from the main body 30 passes through the front cover 22 and is emitted from the lamp unit 10, and is applied to the road surface in front of the vehicle 100. The main body 30 of the present embodiment is configured to be able to change a predetermined image formed by emitted light, and mainly includes a light source unit 31 and a projection lens 35.

The light source unit 31 of the present embodiment includes a light emitting unit 32 including a plurality of light emitting elements as a light emitting unit that emits light, and a circuit board 33 on which the light emitting unit 32 is mounted. The plurality of light emitting elements are arranged in a matrix form to form rows in the up-down direction and the left-right direction, and emit light forward. These light emitting elements can individually change the light amount of light emitted. In the present embodiment, these light emitting elements are micro LEDs (Light Emitting Diodes), and the light source unit 31 is a so-called micro LED array. The number of light emitting elements arranged in the left-right direction and the number of light emitting elements arranged in the up-down direction are not particularly limited.

The projection lens 35 is disposed in front of the light source unit 31, light emitted from the light source unit 31 is incident thereon, and a divergence angle of the light is adjusted by the projection lens 35. Therefore, the light emitted from the main body 30 is light whose divergence angle is adjusted by the projection lens 35, and the light is transmitted through the front cover 22 and emitted from the lamp unit 10. The projection lens 35 of the present embodiment is a convex lens in which the light incident surface and the light emitting surface are formed in a convex shape, and the rear focal point of the projection lens 35 is located on or near the light emitting surface of any light emitting element in the light source unit 31. Therefore, the predetermined image formed by the light emitted from the lamp unit 10 is an image obtained by vertically and horizontally reversing the image formed by the light emitted from the light source unit 31, and the predetermined image will be described later.

The control unit CO includes, for example, an integrated circuit such as a microcontroller, an integrated circuit (IC), a large-scale integrated circuit (LSI), or an application specific integrated circuit (ASIC), or a numerical control (NC) device. In addition, when the NC device is used, the control unit CO may use a machine learning device or may not use a machine learning device. The control unit CO controls the lamp unit 10 by controlling the power supply circuit 50.

The memory ME is configured to store information and read the stored information. The memory ME is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except for a transitory propagating signal (transitory, propagating signal), and does not exclude a volatile recording medium. Various programs for controlling the power supply circuit 50 and information necessary for the control are stored in the memory ME, and the control unit CO reads the programs and information stored in the memory ME.

The power supply circuit 50 includes a driver, and when a control signal is input from the control unit CO, the power supplied to each light emitting element in the light source unit 31 of the lamp unit 10 is adjusted by the driver. In this way, the light amount of the light emitted from each light emitting element is adjusted, and the light is emitted from the lamp unit 10. In the present embodiment, the driver of the power supply circuit 50 adjusts the power supplied to each light emitting element by pulse width modulation (PWM) control, thereby adjusting the amount of light emitted from each light emitting element. However, a method of adjusting the amount of light emitted from each light emitting element is not particularly limited.

The detection device 110 detects a traveling situation of the vehicle. In the present embodiment, the detection device 110 detects an object in front of the vehicle 100. With this detection, the detection device 110 can detect the gradient of the road surface in front of the vehicle 100. Examples of the configuration of the detection device 110 include a configuration including a light detection and ranging (LiDAR), a configuration including a camera, and a configuration including a camera together with the LiDAR. In the present embodiment, the detection device 110 detects the gradient of the road surface at a measurement point in front of the vehicle 100 by a certain distance, and outputs a signal indicating the gradient of the road surface to the control unit CO via an electronic control unit (ECU) 101 of the vehicle 100. Examples of the measurement point include a point 50 m ahead of the vehicle 100. The gradient of the road surface is a relative gradient with respect to the road surface on which the vehicle 100 is located. In the present embodiment, an upward gradient in which the road surface at the measurement point is inclined upward with respect to the road surface on which the vehicle 100 is located and a downward gradient in which the road surface is inclined downward are detected. Note that the configuration of the detection device 110 is not particularly limited. In addition, the detection device 110 may output a signal indicating the gradient of the road surface to the control unit CO without passing through the ECU101 of the vehicle 100.

Next, a predetermined image formed by the light emitted from the lamp unit 10 will be described. Note that this predetermined image is an image formed in a case where the light emitted from the lamp unit 10 is emitted to a plane perpendicular to the emission direction of the light.

The predetermined image is an image in which at least a part of the periphery of the reference image indicating the predetermined character is blurred, and the degree of blurring below the predetermined portion in the predetermined image is stronger than the degree of blurring above the predetermined portion. Note that the degree of blurring is the degree of blurring of the outline of the image, and the more the degree of blurring is, the more the outline of the image appears to be unclear. Examples of a method of changing the degree of blurring include changing the brightness of the outline portion of the image and changing the width of the outline portion. In the present embodiment, the brightness and width of the outline portion can be changed by changing the amount of light emitted from the light emitting element that emits light forming the outline portion. Furthermore, the predetermined portion in the predetermined image is not particularly limited, and may be, for example, a center in the up-down direction in the predetermined image, a portion below the center, or a portion above the center. Furthermore, examples of the character include a figure, a symbol, a character, and the like, and the predetermined character is not particularly limited, and may be, for example, a figure imitating a crystal of snow, an arrow indicating a traveling direction of the vehicle 100, a number indicating a vehicle speed, and the like. The predetermined image of the present embodiment is an image that appears to the driver of the vehicle 100 as two straight images indicating both left and right ends of a region through which the main part of the vehicle 100 passes when the vehicle 100 travels straight when drawn on the road surface in front of the vehicle 100, and the reference image of the predetermined image indicates a figure including the two straight lines. Examples of the main part of the vehicle 100 include a portion between left and right wheels in the vehicle 100.

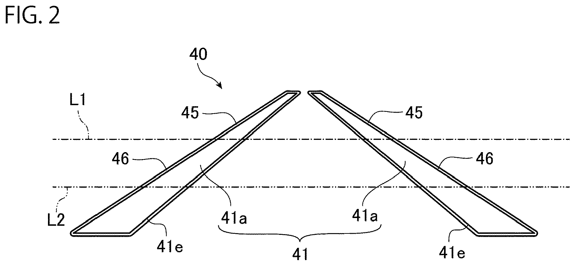

FIG. 2 is a diagram schematically illustrating a predetermined image formed by the light emitted from the lamp unit 10 of the present embodiment, and is a diagram schematically illustrating a predetermined image formed in a case where the light of the lamp unit 10 is emitted to a plane perpendicular to an emission direction of the light. Note that the light emission direction of the lamp unit 10 is substantially parallel to the optical axis of the projection lens 35. In FIG. 2, when a predetermined image 40 is drawn on the road surface in front of the vehicle 100 on a flatland, a first straight line L1 indicating a position at which the distance from vehicle 100 is 30 m is indicated by a one-dot chain line, and a second straight line L2 indicating a position at which the distance from the vehicle 100 is 15 m is indicated by a two-dot chain line. As illustrated in FIG. 2, the predetermined image 40 of the present embodiment includes a reference image 41, an upper contour portion 45, and a lower contour portion 46. The reference image 41 includes two straight portions 41a extending vertically. The width of each straight portion 41a gradually narrows upward. One straight portion 41a is inclined upward to approach the other straight portion 41a side, and the other straight portion 41a is inclined upward to approach the one straight portion 41a side. In addition, the brightness of the upper side of the reference image 41 is brighter than the brightness of the lower side of the reference image 41, and in the present embodiment, the brightness of the reference image 41 is brighter stepwise from the lower side toward the upper side. Note that the brightness of the reference image 41 may be substantially the same in the up-down direction.

In the edge portion 41e of the reference image 41, the upper contour portion 45 is darker than the edge portion 41e while extending in a band shape along the edge portion 41e above the first straight line L1. In the present embodiment, the width of the upper contour portion 45 is substantially constant, and the brightness of the upper contour portion 45 is constant. In the edge portion 41e of the reference image 41, the lower contour portion 46 is darker than the edge portion 41e while extending in a band shape along the edge portion 41e below the first straight line L1. The lower contour portion 46 is brighter than the upper contour portion 45. Therefore, the contrast between the lower contour portion 46 and the reference image 41 is weaker than the contrast between the upper contour portion 45 and the reference image 41. The degree of blurring below the first straight line L1 in the predetermined image 40 is stronger than the degree of blurring above the first straight line L1 in the predetermined image 40. That is, the degree of blurring below the predetermined portion in the predetermined image 40 is stronger than the degree of blurring above the predetermined portion. In the present embodiment, the predetermined portion is a portion overlapping the first straight line L1 and is a portion drawn at a position 30 m away from the vehicle 100 when the predetermined image 40 is drawn on the road surface in front of the vehicle 100, but is not particularly limited.

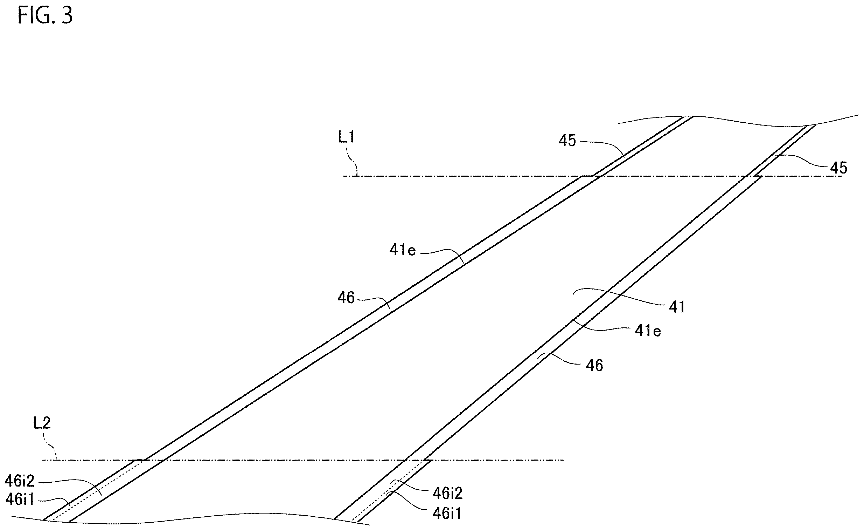

FIG. 3 is an enlarged view illustrating a part of the predetermined image 40 illustrated in FIG. 2, and is a view schematically illustrating a portion including a region between the first straight line L1 and the second straight line L2 in one straight portion 41a. As illustrated in FIG. 3, in the present embodiment, the width of the lower contour portion 46 is wider than the width of the upper contour portion 45. The upper width of the lower contour portion 46 is wider than the lower width of the lower contour portion 46. Specifically, the width of the lower contour portion 46 below the second straight line L2 is wider than the width between the first straight line L1 and the second straight line L2. Therefore, the width of the lower contour portion 46 is narrowed in one step from the lower side to the upper side. The number of stages of change in the width of the lower contour portion 46 is not particularly limited, and may be two or more. Further, the width of the lower contour portion 46 may be substantially constant in the up-down direction, and may be equal to or less than the width of the upper contour portion 45.

In addition, the brightness of the lower contour portion 46 decreases stepwise according to the distance from the edge portion 41e of the reference image 41. Specifically, the brightness of the region 46i1 in which the distance from the edge portion 41e of the reference image 41 is equal to or larger than the width of the lower contour portion 46 between the first straight line L1 and the second straight line L2 is darker than the brightness of the region 46i2 in which the distance from the edge portion 41e of the reference image 41 is smaller than this width. For this reason, the number of stages of change in brightness of the lower contour portion 46 is set to one stage which is the same as the number of stages of change in width of the lower contour portion 46. The number of stages of change in brightness of the lower contour portion 46 is not particularly limited, and may be two or more stages, and may be different from the number of stages of change in width of the lower contour portion 46. The brightness of the lower contour portion 46 may be substantially constant in the up-down direction.

Next, the operation of the vehicle lamp fitting 1 of the present embodiment will be described.

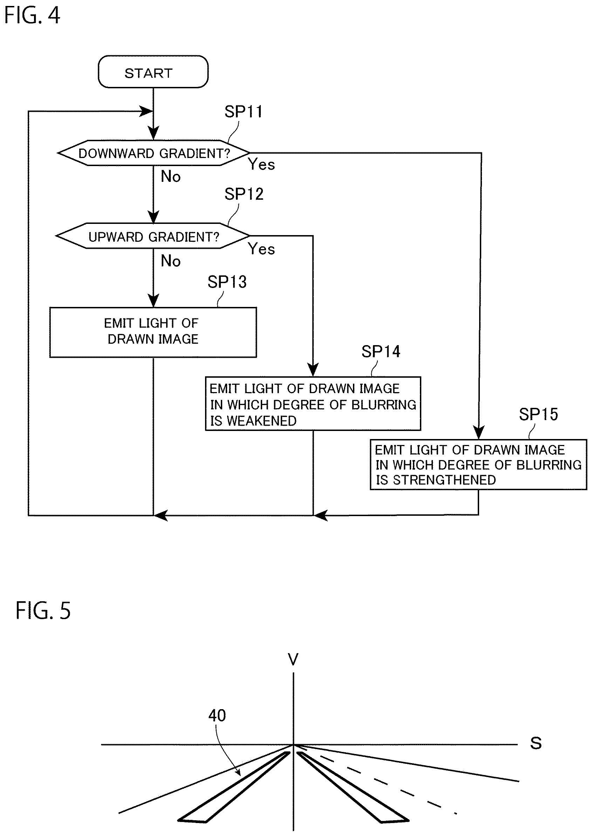

FIG. 4 is a control flowchart of the control unit CO in the present embodiment. As illustrated in FIG. 4, the control flow includes Steps SP11 to SP15.

### (Step SP11)

This step is a step in which the control unit CO changes the step to proceed next depending on the case according to the signal input from the detection device 110. In this step, when the signal indicating the downward gradient of the specific angle or more is not input from the detection device 110, that is, when the lowering point where the gradient in front of the vehicle 100 lowers by the specific angle or more is not detected, the control unit CO advances the control flow to Step SP12. Meanwhile, when this signal is input, that is, when this lowering point is detected, the control unit CO advances the control flow to Step SP15. Note that the specific angle is, for example, one degree, but is not particularly limited.

### (Step SP12)

This step is a step in which the control unit CO changes the step to proceed next depending on the case according to the signal input from the detection device 110. In this step, when the signal indicating the upward gradient of the predetermined angle or more is not input from the detection device 110, that is, when a rising point where the gradient in front of the vehicle 100 rises by the predetermined angle or more is not detected, the control unit CO advances the control flow to Step SP13. When this signal is input, that is, when this rising point is detected, the control unit CO advances the control flow to Step SP14. The predetermined angle is, for example, one degree, but is not particularly limited, and may be different from the specific angle in Step SP11.

### (Step SP13)

This step is a step in which the control unit CO controls the lamp unit 10 so that light forming the predetermined image 40 illustrated in FIG. 2 is emitted. In the present embodiment, the control unit CO controls the power supply circuit 50 based on the information of the predetermined image 40 stored in the memory ME to supply power to each light emitting element of the light source unit 31 of the lamp unit 10. With the supply of the power, the lamp unit 10 emits light for forming the predetermined image 40, and the road surface in front of the vehicle 100 is irradiated with the light to draw the predetermined image 40 on the road surface. Then, the control unit CO advances the control flow to Step SP11.

FIG. 5 is a diagram schematically illustrating an example of a state in which a predetermined image 40 is drawn on a road surface. In FIG. 5, the drawn predetermined image 40 is indicated by a thick line, S indicates a horizontal line, and V indicates a vertical line passing through the center of the vehicle 100 in the left-right direction. As described above, the predetermined image 40 of the present embodiment is an image in which the reference image 41 including two straight lines indicating both left and right ends of a region through which the main part of the vehicle 100 passes when the vehicle 100 travels straight is blurred.

### (Step SP14)

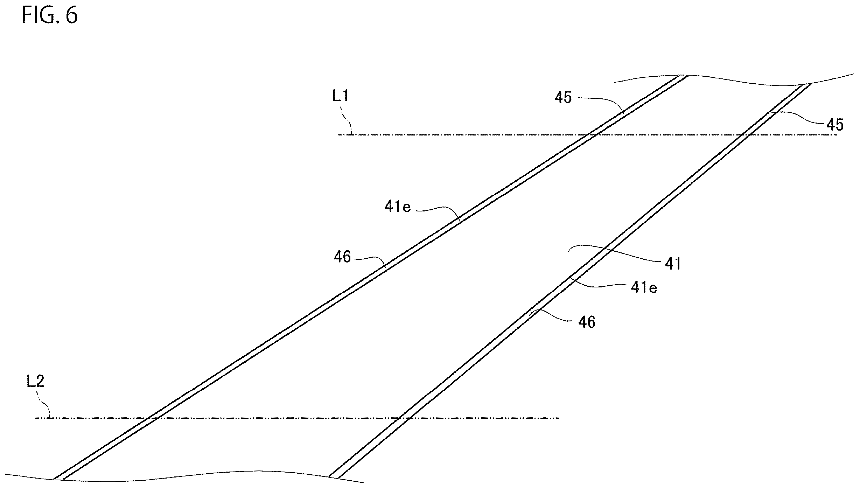

This step is a step in which the control unit CO controls the lamp unit 10 so that the degree of blurring below the predetermined portion in the predetermined image 40 becomes weaker than that in the predetermined image 40 in Step SP13. In the present embodiment, the predetermined portion is a portion drawn at a position 30 m away from the vehicle 100 when the predetermined image 40 is drawn on the road surface in front of the vehicle 100, and is a portion overlapping the first straight line L1. Then, as illustrated in FIG. 6, the width of the lower contour portion 46 is narrowed so that the width of the lower contour portion 46 is the same as the width of the upper contour portion 45. In this way, the degree of blurring below the predetermined portion is weakened, and the step at the connection portion between the lower contour portion 46 and the upper contour portion 45 is eliminated. That is, the control unit CO controls the lamp unit 10 so that the predetermined image 40 becomes as described above. Then, the control unit CO advances the control flow to Step SP11.

Note that the degree of blurring on the lower side of the predetermined portion in the predetermined image 40 may be weakened, and for example, the width of the lower contour portion 46 and the width of the upper contour portion 45 may not be the same. In addition, the control unit CO may control the lamp unit 10 so that the brightness of the lower contour portion 46 becomes lower than that of the predetermined image 40 in Step SP13.

### (Step SP15)

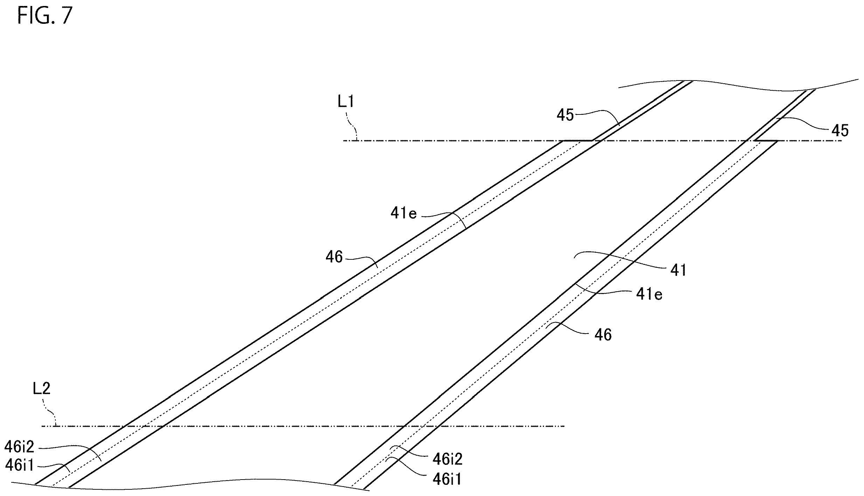

This step is a step in which the control unit CO controls the lamp unit 10 so that the degree of blurring below the predetermined portion in the predetermined image 40 becomes stronger than that in the predetermined image 40 in Step SP13. In the present embodiment, the predetermined portion is a portion overlapping the first straight line L1. Then, as illustrated in FIG. 7, the width of the lower contour portion 46 is widened so that the width of the lower contour portion 46 becomes a constant width. In this way, the degree of blurring below the predetermined portion is strengthened. That is, the control unit CO controls the lamp unit 10 so that the predetermined image 40 becomes as described above. Then, the control unit CO advances the control flow to Step SP11.

Note that the degree of blurring below the predetermined portion in the predetermined image 40 only needs to be increased. For example, the width of the expanded lower contour portion 46 may not be constant, and the width of the lower contour portion 46 may be expanded by a constant amount. In addition, the control unit CO may control the lamp unit 10 so that the brightness of the lower contour portion 46 becomes brighter than the predetermined image 40 in Step SP13.

As described above, the vehicle lamp fitting 1 of the embodiment changes the degree of blurring of the predetermined image 40 formed by the light emitted from the lamp unit 10 based on the information input from the detection device 110, and draws the predetermined image 40 on the road surface in front of the vehicle 100. Note that the control flow is not particularly limited. For example, Step SP11 and Step SP12 may be performed simultaneously, or Step SP12 may be performed before Step SP11.

As described above, the vehicle lamp fitting 1 of the present embodiment includes the lamp unit 10. The lamp unit 10 emits light toward a road surface in front of the vehicle 100 to perform drawing on the road surface. When a plane perpendicular to an emission direction of the light is irradiated with the light, the light forms the predetermined image 40 in which at least a part of a periphery of a reference image 41 indicating a predetermined character is blurred. The light forming the upper side of the predetermined portion in the predetermined image 40 is emitted to the road surface farther from the vehicle 100 as compared with the light forming the lower side of the predetermined portion. Therefore, the image drawn by the light forming the upper side of the predetermined portion in the predetermined image 40 looks blurred by the diffusion of the light as compared with the image drawn by the light forming the lower side of the predetermined portion. In the vehicle lamp fitting 1 of the present embodiment, the predetermined image 40 is an image in which at least a part of the periphery of the reference image 41 indicating a predetermined character is blurred. In the predetermined image 40, the degree of blurring below the portion overlapping the first straight line L1 as the predetermined portion illustrated in FIG. 2 is stronger than the degree of blurring above the portion overlapping the first straight line L1. Therefore, according to the vehicle lamp fitting 1 of the present embodiment, as compared with the case where the degree of blurring of the predetermined image 40 formed by the light emitted from the lamp unit 10 is the same in the up-down direction, the degree of blurring around the reference image 41 drawn on the road surface can be made uniform in the up-down direction, and it is possible to suppress the feeling of discomfort about the reference image 41 drawn on the road surface.

Further, as illustrated in FIGS. 2 and 3, in the present embodiment, the predetermined image 40 includes the reference image 41, the upper contour portion 45, and the lower contour portion 46. The upper contour portion 45 extends in a band shape along the edge portion 41e above the portion overlapping the first straight line L1, and the lower contour portion 46 extends in a band shape along the edge portion 41e below the portion overlapping the first straight line L1 and is brighter than the upper contour portion 45. The width of the lower contour portion 46 is larger than the width of the upper contour portion 45. Therefore, according to the vehicle lamp fitting 1 of the present embodiment, as compared with the case where the width of the lower contour portion 46 is narrower than the width of the upper contour portion 45, the degree of blurring below the predetermined portion in the predetermined image 40 can be easily made stronger than the degree of blurring above the predetermined portion.

In addition, in the vehicle lamp fitting 1 of the present embodiment, the brightness of the lower contour portion 46 decreases stepwise according to the distance from the edge portion 41e of the reference image 41. Therefore, according to the vehicle lamp fitting 1 of the present embodiment, it is possible to suppress feeling of discomfort in the degree of blurring below the portion overlapping the first straight line L1 in the reference image 41 drawn on the road surface. Note that, from this viewpoint, it is sufficient that the brightness on the side opposite to the edge portion 41e side in the lower contour portion 46 is darker than the brightness on the edge portion 41e side, and for example, the brightness of the lower contour portion 46 may gradually become dark according to the distance from the edge portion 41e of the reference image 41. In addition, in the vehicle lamp fitting 1 of the present embodiment, the brightness of the lower contour portion 46 decreases stepwise according to the distance from the edge portion 41e of the reference image 41. Therefore, according to the vehicle lamp fitting 1 of the present embodiment, it is possible to suppress the feeling of discomfort in the blur below the predetermined portion around the reference image 41 drawn on the road surface. Note that, from this viewpoint, it is sufficient that the brightness on the side opposite to the edge portion 41e side in the lower contour portion 46 is darker than the brightness on the edge portion 41e side, and for example, the brightness of the lower contour portion 46 may gradually become dark according to the distance from the edge portion 41e of the reference image 41. Furthermore, the brightness on the side opposite to the edge portion 41e side in the upper contour portion 45 may be made darker than the brightness on the edge portion 41e side, and for example, the brightness of the upper contour portion 45 may gradually become darker according to the distance from the edge portion 41e of the reference image 41.

In the vehicle lamp fitting 1 of the present embodiment, the upper width of the lower contour portion 46 is narrower than the lower width of the lower contour portion 46. In the image drawn on the road surface, the portion closer to the vehicle 100 tends to be less likely to blur, and the lower side of the predetermined image 40 formed by the light emitted from the lamp unit 10 is drawn on the road surface closer to the vehicle 100. Therefore, according to the vehicle lamp fitting 1 of the present embodiment, the degree of blurring around the drawn reference image 41 can be made uniform in the up-down direction as compared with the case where the upper side and the lower side of the lower contour portion 46 have the same width.

In the vehicle lamp fitting 1 of the present embodiment, the width of the lower contour portion 46 is narrowed stepwise from the lower side to the upper side. Therefore, according to the vehicle lamp fitting 1 of the present embodiment, the degree of blurring around the drawn reference image 41 can be made more uniform in the up-down direction. From this viewpoint, the width of the lower contour portion 46 may gradually decrease from the lower side to the upper side. Further, the upper width of the upper contour portion 45 may be narrower than the lower width of the upper contour portion 45, and the width of the upper contour portion 45 may be stepwise narrower from the lower side to the upper side, or may be gradually narrower from the lower side to the upper side.

In the vehicle lamp fitting 1 of the present embodiment, the brightness of the upper side of the reference image 41 is brighter than the brightness of the lower side of the reference image 41. In the image drawn on the road surface, a portion farther from vehicle 100 tends to be darker due to diffusion of light. Therefore, with the above configuration, the brightness of the drawn reference image 41 can be made uniform in the up-down direction as compared with the case where the brightness is the same between the upper side and the lower side of the reference image 41.

In addition, in the vehicle lamp fitting 1 of the present embodiment, the brightness of the reference image 41 increases stepwise from the lower side to the upper side. Therefore, according to the vehicle lamp fitting 1 of the present embodiment, the brightness of the drawn reference image 41 can be made more uniform in the up-down direction. From this viewpoint, the brightness of the reference image 41 may gradually increase from the lower side to the upper side.

In addition, the vehicle lamp fitting 1 of the present embodiment includes the control unit CO, and the control unit CO controls the lamp unit 10 so that the degree of blurring of the predetermined image 40 changes based on the information input from the detection device 110 that detects the traveling situation of the vehicle 100. Then, in the present embodiment, when the detection device 110 detects a rising point where the gradient ahead of the vehicle 100 rises by a predetermined angle or more, the control unit CO controls the lamp unit 10 so that the degree of blurring below the portion overlapping the first straight line L1 in the predetermined image 40 becomes weaker than when the rising point is not detected.

For example, an optical path length of light emitted to the side further back than a rising point where the gradient of the road surface relatively rises, such as a point where the road surface changes from a flatland to an uphill or a point where the road surface changes from a downhill to a flatland, is shorter than a case where the gradient of the road surface does not change. For this reason, in the image drawn on the side further back than the rising point, the degree of blurring is weakened as compared with the case where the gradient of the road surface does not change. In the vehicle lamp fitting 1 of the present embodiment, when the rising point is detected, the degree of blurring below the portion overlapping the first straight line L1 in the predetermined image 40 is weaker than when the rising point is not detected. Therefore, according to the vehicle lamp fitting 1 of the present embodiment, the degree of blurring around the drawn reference image 41 can be made uniform in the up-down direction as compared with the case where the degree of blurring below the portion overlapping the first straight line L1 in the predetermined image 40 does not change when the rising point is detected.

Note that, from this viewpoint, the control unit CO may control the lamp unit 10 so that the degree of blurring on the lower side of the portion overlapping the first straight line L1 in the predetermined image 40 becomes weaker as the upward gradient is larger. In addition, from this viewpoint, the control unit CO may control the lamp unit 10 so that the degree of blurring on the upper side of the portion overlapping the first straight line L1 in the predetermined image 40 becomes stronger than the case where the rising point is not detected. In this case, for example, the brightness of the upper contour portion 45 is increased or the width of the upper contour portion 45 is increased. In addition, the control unit CO may control the lamp unit 10 so that the degree of blurring on the upper side of the portion overlapping the first straight line L1 in the predetermined image 40 becomes stronger as the upward gradient is larger.

In addition, in the vehicle lamp fitting 1 of the present embodiment, when the detection device 110 detects the lowering point where the gradient in front of the vehicle 100 lowers by a specific angle or more, the control unit CO controls the lamp unit 10 so that the degree of blurring on the lower side of the portion overlapping the first straight line L1 in the predetermined image 40 becomes stronger as compared with the case where the lowering point is not detected.

For example, an optical path length of light emitted to the side further back than a lowering point where the gradient of the road surface relatively lowers, such as a point where the road surface changes from a flatland to a downhill or a point where the road surface changes from an uphill to a flatland, is longer than a case where the gradient of the road surface does not change. Therefore, in the image drawn on the side further back than the lowering point, the degree of blurring is stronger than the case where the gradient of the road surface does not change. In the vehicle lamp fitting 1 of the present embodiment, when the lowering point is detected, the degree of blurring below the portion overlapping the first straight line L1 in the predetermined image 40 is stronger than when the lowering point is not detected. Therefore, according to the vehicle lamp fitting 1 of the present embodiment, the degree of blurring around the drawn reference image 41 can be made uniform in the up-down direction as compared with the case where the degree of blurring below the portion overlapping the first straight line L1 in the predetermined image 40 does not change when the lowering point is detected.

Note that, from this viewpoint, the control unit CO may control the lamp unit 10 so that the degree of blurring on the lower side of the portion overlapping the first straight line L1 in the predetermined image 40 becomes stronger as the downward gradient is larger. In addition, from this viewpoint, the control unit CO may control the lamp unit 10 so that the degree of blurring on the upper side of the portion overlapping the first straight line L1 in the predetermined image 40 becomes weaker as compared with the case where the lowering point is not detected. In this case, for example, the brightness of the upper contour portion 45 is lowered or the width of the upper contour portion 45 is narrowed. In addition, the control unit CO may control the lamp unit 10 so that the degree of blurring on the upper side of the portion overlapping the first straight line L1 in the predetermined image 40 becomes weaker as the upward gradient is larger.

Although the present invention has been described by taking the above-described embodiment as an example, the present invention is not limited thereto.

For example, in the above embodiment, the control unit CO that controls the lamp unit 10 so that the degree of blurring of the predetermined image 40 changes based on the information input from the detection device 110 that detects the gradient of the road surface in front of the vehicle 100 has been described as an example. However, the detection device that detects the traveling situation of the vehicle is not limited to the detection device 110 that detects the gradient of the road surface in front of the vehicle 100. Examples of the traveling situation of the vehicle include a traveling speed of the vehicle 100, brightness around the vehicle 100, and the like. Then, the control unit CO may control the lamp unit 10 so that the degree of blurring of the predetermined image 40 changes according to the traveling speed of the vehicle 100, or may control the lamp unit 10 so that the degree of blurring of the predetermined image 40 changes according to the brightness around the vehicle 100. In addition, the degree of blurring of the predetermined image 40 may not be changed according to the traveling situation of the vehicle 100, and the control unit CO may not control the lamp unit 10 according to the traveling situation of the vehicle 100.

In the above embodiment, the predetermined image 40 having the upper contour portion 45 having constant brightness and width has been described as an example. However, the degree of blurring below the predetermined portion in the predetermined image 40 may be stronger than the degree of blurring above the predetermined portion. For example, the predetermined image 40 includes only the reference image 41 and the lower contour portion 46, and may not have the upper contour portion 45. Even with such a configuration, the degree of blurring below the predetermined portion is stronger than the degree of blurring above the predetermined portion.

Furthermore, in the above-described embodiment, the light source unit 31 including the plurality of light emitting elements capable of individually changing the amount of light of emitted light has been described as an example. However, the light source unit 31 is not particularly limited as long as the lamp unit 10 can emit light forming the predetermined image 40 in which the reference image 41 indicating a predetermined character is blurred. For example, the light source unit 31 may include a digital mirror device (DMD) including a plurality of reflective elements arranged in a matrix and a light emitting unit that irradiates the DMD with light. The DMD can adjust the amount of light emitted in a predetermined direction from the reflecting surface of each reflective element, and can emit light for forming the predetermined image 40 by adjusting the light emitted in the predetermined direction from each reflective element. In this case, it can be understood that it corresponds to a light emitting unit capable of individually changing the light amount of light emitted by the reflecting surface of each reflective element. Furthermore, the configuration of the light source unit 31 may include a light source and a liquid crystal on silicon (LCOS) that diffracts light emitted from the light source. In this case, the LCOS is controlled so that light for forming the predetermined image 40 is emitted. Furthermore, the configuration of the light source unit 31 may include a light source and a transmissive liquid crystal panel that transmits light emitted from the light source. In this case, the liquid crystal panel is controlled so that light for forming the predetermined image 40 is emitted.

In the above embodiment, the light emitted from one lamp unit 10 forms the predetermined image 40. However, the predetermined image 40 may be formed by light emitted from the plurality of lamp units. Furthermore, the lamp unit may be configured to emit light forming the predetermined image 40 and light different from the light. Examples of light different from light forming the predetermined image 40 include light forming a light distribution pattern of a low beam and light forming a light distribution pattern of a high beam.

According to the present invention, there is provided a vehicle lamp fitting that can suppress feeling of discomfort about an image drawn on a road surface, and the vehicle lamp fitting can be used in the field of vehicle lamp fittings for automobiles and the like.

## Claims

1. A vehicle lamp fitting comprising:
a lamp unit that emits light toward a road surface in front of a vehicle and performs drawing on the road surface,
wherein the light forms a predetermined image in which at least a part of a periphery of a reference image indicating a predetermined character is blurred when a plane perpendicular to an emission direction of the light is irradiated with the light, and
a degree of blurring below a predetermined portion in the predetermined image is stronger than a degree of blurring above the predetermined portion.

2. The vehicle lamp fitting according to claim 1,
wherein the predetermined image includes the reference image, an upper contour portion extending in a band shape along an edge portion of the reference image above the predetermined portion and being darker than the edge portion, and a lower contour portion extending in a band shape along the edge portion of the reference image below the predetermined portion and being darker than the edge portion, and
the lower contour is brighter than the upper contour.

3. The vehicle lamp fitting according to claim 2,
wherein a width of the lower contour portion is wider than a width of the upper contour portion.

4. The vehicle lamp fitting according to claim 1,
wherein the predetermined image includes only the reference image and a lower contour portion that extends in a band shape along an edge portion of the reference image below the predetermined portion and is darker than the edge portion.

5. The vehicle lamp fitting according to claim 2,
wherein brightness of the lower contour portion decreases stepwise in accordance with a distance from the edge portion of the reference image.

6. The vehicle lamp fitting according to claim 2,
wherein an upper width of the lower contour portion is narrower than a lower width of the lower contour portion.

7. The vehicle lamp fitting according to claim 6,
wherein a width of the lower contour portion is narrowed stepwise from a lower side to an upper side.

8. The vehicle lamp fitting according to claim 1,
wherein brightness of an upper side of the reference image is brighter than brightness of a lower side of the reference image.

9. The vehicle lamp fitting according to claim 8,
wherein the brightness of the reference image becomes brighter stepwise from the lower side to the upper side.

10. The vehicle lamp fitting according to any one of claims 1 to 9, further comprising:
a control unit that controls the lamp unit so that a degree of blurring of the predetermined image changes based on information input from a detection device that detects a traveling situation of the vehicle.

11. The vehicle lamp fitting according to claim 10,
wherein the control unit controls the lamp unit so that a degree of blurring below the predetermined portion in the predetermined image becomes weaker when a rising point where a gradient in front of the vehicle rises by a predetermined angle or more is detected by the detection device than when the rising point is not detected.

12. The vehicle lamp fitting according to claim 10,
wherein the control unit controls the lamp unit so that a degree of blurring below the predetermined portion in the predetermined image becomes stronger when a lowering point where a gradient in front of the vehicle lowers by a specific angle or more is detected by the detection device than when the lowering point is not detected.
